Europäisches Patentamt

European Patent Office

Office européen des brevets

(11) Publication number: **0 132 091**
A2

# (12) EUROPEAN PATENT APPLICATION

(21) Application number: **84304631.9**

(22) Date of filing: **06.07.84**

(51) Int. Cl.⁴: **C 09 D 3/58**
**C 09 D 3/72, C 08 K 3/08**

(30) Priority: **14.07.83 US 513896**

(43) Date of publication of application:
**23.01.85 Bulletin 85/4**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Liu, Tony Yuenkai**
**13 Glen Oak Drive**
**East Windsor New Jersey 08817(US)**

(74) Representative: **Jones, Alan John**
**CARPMAELS & RANSFORD 43 Bloomsbury Square**
**London, WC1A 2RA(GB)**

(54) Aluminized epoxy-urethane coating compositions.

(57) A two-component coating system in which the two components are mixed in a volume ratio of 1:3 to 3:1 immediately prior to application. Component A comprising (1) the reaction product of a digylcidyl ether of a bisphenol, a polyfunctional acid and a mixture of high base strength and low base strength amines; (2) a cumarone-indene resin; (3) a thixotropic agent; (4) a lamellar extender; and (5) a non-leafing aluminum paste; and Component B comprising a urethane prepolymer based on a flexible polyhydroxy functional oligomer and a diisocyanate.

F-2343-L

## ALUMINIZED EPOXY-URETHANE COATING COMPOSITIONS

This invention relates to two-component aluminized epoxy-urethane coating compositions.

Two-component coating systems employing some of the inddividual ingredients included in the compositions of the invention, are described in U. S. Patents 4,282,123 and 4,342,674. It has been found, however, that the corrosion resistance and performance of the coating compositions of the invention are unexpectedly and outstandingly superior to those of the prior art coatings.

According to the invention, there is provided a two-component coating composition,

Component A comprising (1) the reaction product of a digylcidyl ether of a bisphenol having an epoxy equivalent weight from 170 to 2,000, a polyfunctional acid in an amount from 0.1 to 0.6 equivalent per equivalent of epoxy resin, and a mixture of a high base strength aliphatic amine and a low base strength aromatic amine each in an amount from 0.1 to 0.6 equivalent per equivalent of epoxy resin, the weight ratio of aliphatic amine to aromatic amine being from 2:1 to 1:2; (2) from 3.0 to 12.0 weight percent of a cumarone-indene resin having a softening point from 4 to 28°C; (3) a thickening proportion of a thixotropic agent; (4) an extending proportion of a lamellar extender; and (5) from 20.0 to 35.0 weight percent of a non-leafing aluminum paste; and

Component B comprising a urethane prepolymer based on a flexible polyhydroxy functional oligomer and a diisocyanate;

Components A and B being in a volume ratio from 1:3 to 3:1 and being mixed immediately prior to application of the coating composition.

The compositions of the invention provide high build maintenance coatings for application over various surface preparations on steel substrates. Such coatings are designed for use as high performance coatings in heavy industrial environments. The two-component system of the invention is particularly adapted for coating structures or areas where sandblasting is prohibited or
impractical, and where the commonly used conventional coatings
compatible with hand or power tool cleaning do not provide adequate
protection or performance.  In addition, the compositions of the
invention have excellent low temperature curing properties.

The two components, A and B, of the coating compositions of
the invention are mixed in a volume ratio of 3:1 to 1:3 just prior to
application.  After the components have been mixed, the resulting
composition has a pot life of approximately 3 to 4 hours at room
temperature.  The pot life obviously is somewhat temperature
dependent, with a shorter pot life at higher temperature.  In
practice, the mixed components are generally applied to a sandblasted
metal surface or a hand cleaned metal surface in any suitable manner.

As indicated above, Component A of the composition contains a
modified epoxy resin, a cumarone-indene resin, a thixotropic agent,
non-leafing aluminum paste, a lamellar extender and suitable
solvents.  Other coloring pigments can, optionally, be present.

The epoxy resins are the diglycidyl ethers of bisphenols, a
class of compounds which are constituted by a pair of phenolic groups
linked through an intervening aliphatic bridge.  While any of the
bisphenols may be used, 2,2-bis (p-hydroxyphenyl) propane, commonly
known as bisphenol A, is more widely available in commerce and is
preferred.

The epoxy resins have epoxy equivalent weights from 170 to
2,000 and epoxy values from 0.60 to 0.05.  The preferred epoxy resins,
i.e., those made from bisphenol A, have two epoxy groups per
molecule.  A preferred commercially available epoxy resin is EPON 829.

The polyfunctional acids reacted with the epoxy resins
include aliphatic dicarboxylic acids having the structure
$HOOC(CH_2)_n COOH$ in which n is 2 to 8.  Such aliphatic dicarboxylic
acids include adipic acid, pimelic acid, suberic acid, azelaic acid
and sebacic acid.

The polyfunctional acids may also be dimerized unsaturated
fatty acids up to and including 36 carbon atom dimer acids and diacids
resulting from Diels-Alder condensation of acrylic acid or methacrylic acid with conjugated unsaturated fatty acids having up to 18 carbon atoms.  Other polyfunctional acids that may be used are acid-terminated polyesters containing at least 40% of components derived from $C_4$-$C_9$ alkanedioic acids and carboxylic acid terminal polybutadiene and copolymers of butadiene with acrylonitrile.

The high base strength aliphatic amines include the aliphatic and cycloaliphatic, primary, secondary and tertiary amines, preferably containing up to 15 carbon atoms, for example methylamine, ethylamine, propylamine, isopropylamine, butylamine, isobutylamine, sec-butylamine, tert-butylamine, amylamine, isoamylamine, sec-amylamine, tert-amylamine, hexylamine, heptylamine, diisopropylamine, dibutylamine, diisobutylamine, trimethylamine, triethylamine, tripropylamine, tributylamine, triisobutylamine, cyclohexylamine, and cycloheptylamine.

The low base strength aromatic amines include the primary, secondary and tertiary amines, for example aniline, ortho-, meta-, and paratoluidine, the xylidines, the phenylenediamines, N-methylaniline, N-ethylaniline, dimethylaniline, triphenylamine, alpha-naphthylamine, beta-naphthylamine, pyridine and substituted pyridines and benzylamine.

The epoxy resin is reacted with the polyfunctional acid, the high base strength aliphatic amine and the low base strength aromatic amine in an amount to react with from half to all of the epoxy groups.  The amount of polyfunctional acid is 0.1 to 0.6 equivalent per equivalent of epoxy resin.  The amount of each of the high base strength aliphatic amine and the low base strength aromatic amine is also 0.1 to 0.6 equivalent per equivalent of epoxy resin.  The weight ratio of the high base strength aliphatic amine to the low base strength aromatic amine is from 2:1 to 1:2, the precise ratio depending upon the desired rate of cure for the intended application of the composition.

Although a catalyst is not essential, it may be desired to use a suitable catalyst in the reaction between the epoxy resin and the polyfunctional acid.  Suitable catalysts are tertiary amines, tertiary phosphines, and quaternary ammonium and phosphonium compounds.

F-2343-L                                        - 4 -

        The polyfunctional acid, the high base strength aliphatic
amine and the low base strength aromatic amine are readily adducted to
the epoxy resin, usually in sequence, at temperatures of about 163°C
in about 2 to 3 hours.

        An example of a modified epoxy resin for use in Component A
may be prepared using the following recipe:

        EPON 829*              70.33% by weight
        Dimer acid             19.84% by weight
        Aniline                2.95-8.85% by weight
        Cyclohexylamine        0.98-6.88% by weight
                               ‾‾‾‾‾‾‾‾‾
                               100.00%

*   Epoxy equivalent weight of 193-203.


        An example of a procedure for formulating such a modified
epoxy resin is as follows:

        1.    Epon 829 and dimer acid (Empol 1016) are charged to a
kettle equipped with agitation and inert gas atmosphere;

        2.    the temperature is raised to about 163°C and held for
about 45 minutes;

        3.    heating is stopped and addition of the aniline begun at
a steady rate over a 15 minute period;  following addition of the
aniline, the cyclohexylamine is added also over a 15 minute period;

        4.    the reaction mixture is maintained for 90 minutes at
163°C after complete addition of the cyclohexylamine;

        5.    the composition is reduced to 50 to 80% solids with
cellosolve acetate and ethylbenzene 80/20 weight %;  the temperature
is maintained above 121°C during the addition of these solvents.

        In formulating Component A, a 50 to 80% solids solution of
the modified epoxy resin is mixed with a cumarone-indene resin having
a softening point from 4 to 28°C in an amount from 3.0 to 12.0 weight
percent based on total solids, and a thixotropic agent such as castor
wax, for example 24% solids dissolved in mineral spirits or xylene.
Thereafter a lamellar extender, such as water ground mica (325 U. S.
Standard mesh, 0.044 mm) or a magnesium silicate talc extender is
intimately mixed in using suitable equipment.  The extender component
of the composition may be present in an amount from 60 to 80 weight percent based on the total solids of the composition.  Thereafter, a
non-leafing aluminum powder in paste form is separately blended with a
portion of the modified epoxy resin solution and this combination is
then thoroughly mixed with the balance of the composition.

The weight percentage ranges of the constituents in Component
A are:

| | |
|---|---|
| Modified epoxy solution (55% solids) | 41.0 to 50.4 wt. % |
| Cumarone-indene resin | 3.0 to 12.0 wt. % |
| Thixotropic agent | 0.6 to 0.8 wt. % |
| Lamellar extender | 1.0 to 2.2 wt. % |
| Pigment or filler | 0 to 2.2 wt. % |
| Non-leafing aluminum paste | 20.0 to 35.0 wt. % |
| Total solvents | 10.0 to 13.5 wt. % |

In the Component A formulation described above, the principal
solvents are cellosolve acetate and ethylbenzene.  However, additional
or alternative solvents may be employed to facilitate or assist in
solution or dispersion of the several constituents.  Examples of such
solvents are $C_1$-$C_6$ alkoxyethyl acetates such as ethoxyethyl
acetate; alkyl ketones such as methylethyl ketone; ethyl acetate;
propylene glycol methyl ether acetate; aromatic hydrocarbons such as
toluene, ethylbenzene, and xylene; and mineral spirits.  The amount of
solvent is sufficient to adjust the solids content of Component A to
50 to 80 weight percent.

Component B comprises a long dihydroxy oligomer having
isocyanate end groups.  Such materials are adducts containing flexible
segments and are prepared by selectively reacting one of the two
isocycanate groups of a diisocyanate (for example toluene
diisocyanate, isophorone diisocyanate, aliphatic hexamethylene
diisocyanate, diphenylmethane diisocyanate or aromatic hexamethylene
diisocyanate) with the terminal hydroxyl groups of a flexible
polyfunctional oligomer such as:

hydroxy-terminated polyalkylene oxides formed by
polymerization of ethylene, propylene or butylene oxides;

hydroxy-terminated polyalkylene oxides copolymerized with minor amounts of trimethylol ethane, trimethylol propane, gylcerol or pentaerythritol to form lightly branched structures;

hydroxy-terminated polyesters containing at least 40% of components which are $C_4$-$C_9$ alkane diols and alkane dioic acids; and

hydroxy-terminated polybutadienes.

The following Examples illustrate the invention.

## EXAMPLE 1

### COMPONENT A

Component A was prepared in a tank equipped with a high shear disperser as follows:

90 kg of the epoxy resin described above, as a 55% solids solution, was intimately mixed with 43.2 kg of a cumarone-indene resin having a softening point of 4 to 27°C and 3.55 kg of a 24% solids solution of castor wax in xylene. During mixing, the composition was warmed to 38°C. Thereafter, 9 kg of a phthalocyanine blue pigment and 9 kg of a water ground mica (325 mesh, 0.044 mm) were added to the tank and mixed until the degree of dispersion was 2 NS Hegman gauge units. Thereafter, 127.95 kg of additional modified epoxy resin and 135.85 kg of non-leafing aluminum paste (65 weight percent aluminum/35 weight percent mineral spirits) were intimately mixed together and then thoroughly dispersed into the tank contents. This mixture was let down with 57.85 kg of cellosolve acetate solvent.

## EXAMPLE 2

### COMPONENT B

An aromatic polyisocyanate adduct was prepared by selectively reacting one of the two isocyanate groups of toluene diisocyanate (TDI) with the terminal hydroxy group of trimethylol propane. 3 moles of the TDI were reacted with 1 mole of trimethylol propane to produce a polyisocyanate adduct which contained, on a solid basis, less than about 7% of the original TDI monomer. This was reduced to 75% solids with ethyl acetate to yield 495.05 kg of solution. This isocyanate adduct solution had a NCO content of 16.5% and an average equivalent weight of 255.

## EXAMPLE 3

COATING COMPOSITION

70.0 litres of Component A were intimately mixed with 30.0 litres of Component B. The resultant composition had a solids content of about 50.0 weight percent and a pot life of about 3 to 4 hours at room temperature.

Sandblasted steel panels were coated to 0.13 mm dry film thickness with the coating composition of Example 3 and dried for 7 days in air. The panels were scribed and subjected to a salt spray consisting of 5% salt in water. After 3,000 hours, no effect was noted on any portion of the panels. After 3,500 hours, approximately four, 3 mm diameter corrosion blisters were noted in the scribed areas. This amounted to a comparatively small amount of corrosion under the circumstances. Wire brushed rusty steel panels were also coated with the composition of Example 3 and it was not until 3,500 hours that two comparatively small corrosion blisters were observed in scribed areas. Panels coated with the composition of Example 3 were also immersed in fresh water for a period of seven months. Sand blasted steel so coated showed no effect after seven months. Wire brushed rusty steel coated with the composition of Example 3 showed some rusting in scribed areas after the onset of the seventh month. Sand blasted steel panels coated with the composition of Example 3 were immersed in sea water for seven months without showing the effects of corrosion to any extent. Coated, wire brushed rusty steel was immersed in sea water for seven months and, again, some rusting was apparent on scribed areas of the panels.

Panels coated with the composition of Example 3 have also shown no deterioration when immersed for three and one-half months in gasohol, ethyl alcohol, unleaded gasoline, toluene, 10% sodium hydroxide and 5% hydrochloric acid solutions. When used as a top coat over several primers, this product has presented excellent intercoat adhesion and no effect upon 2,500 hours salt spray testing.

F-2343-L

CLAIMS:

1. A two-component coating composition,

Component A comprising (1) the reaction product of a diglycidyl ether of a bisphenol, having an epoxy equivalent weight from 170 to 2,000, a polyfunctional acid in an amount from 0.1 to 0.6 equivalent per equivalent of epoxy resin, and a mixture of a high base strength aliphatic amine and a low base strength aromatic amine each in an amount from 0.1 to 0.6 equivalent per equivalent of epoxy resin, the weight ratio of aliphatic amine to aromatic amine being from 2:1 to 1:2; (2) from 3.0 to 12.0 weight percent of a cumarone-indene resin having a softening point from 4 to 28°C; (3) a thickening proportion of a thixotropic agent; (4) an extending proportion of a lamellar extender; and (5) from 20.0 to 35.0 weight percent of a non-leafing aluminum paste; and

Component B comprising a urethane prepolymer based on a flexible polyhydroxy functional oligomer and a diisocyanate;

Components A and B being in a volume ratio from 1:3 to 3:1 and being mixed immediately prior to application of the coating composition.

2. A composition according to claim 1, wherein the bisphenol is bisphenol A.

3. A composition according to claim 1 or claim 2, including a colored pigment.

4. A composition according to any one of claims 1 to 3, wherein in Component A the modified epoxy resin has an epoxy equivalent weight from 193 to 203, the polyfunctional acid is dimer acid, the aliphatic amine is cyclohexylamine and the aromatic amine is aniline.

F-2343-L                          - 9 -

5.   A composition according to any one of claims 1 to 4, wherein Component B is a urethane prepolymer based on toluene diisocyanate reacted with the terminal hydroxyl group of trimethylol propane.

3560H/0200H